# EUROPEAN PATENT SPECIFICATION

(11) **EP 3 267 643 B1**
(45) Date of publication and mention of the grant of the patent: **18.09.2019**
(21) Application number: 15896630.9
(22) Date of filing: 29.06.2015
(51) Int. Cl.: H04L 5/00, H04L 27/00, H04W 72/04

(54) **EFFICIENT TRANSMISSION AND RECEPTION OF CHANNEL STATE INFORMATION REFERENCE SIGNALS**
EFFIZIENTES SENDEN UND EMPFANGEN VON REFERENZSIGNALEN FÜR DIE KANALSTATUSINFORMATIONEN
TRANSMISSION ET RECEPTION EFFICACE DE SIGNAUX DE RÉFÉRENCE D'INFORMATIONS D'ÉTAT DU CANAL DE TRANSMISSION

(43) Date of publication of application: 10.01.2018
(73) Proprietor: Huawei Technologies Co., Ltd., Longgang Shenzhen, Guangdong 518129 (CN)
(72) Inventor: XU, Kai, Shenzhen Guangdong 518129 (CN); LI, Xiaocui, Shenzhen Guangdong 518129 (CN)
(74) Representative: Pfenning, Meinig & Partner mbB
(86) International application number: PCT/CN2015/082595
(87) International publication number: WO 2017/000099

(56) References cited:
- CN-A- 104 301 273
- CN-A- 104 333 902
- CN-A- 104 486 792
- US-A1- 2014 286 184
- US-A1- 2015 181 453
- LG ELECTRONICS: "CSI support in LAA", 3GPP DRAFT; R1-152738 , vol. RAN WG1, no. Fukuoka, Japan; 20150525 - 20150529 24 May 2015 (2015-05-24), XP050972810, Retrieved from the Internet: URL:http://www.3gpp.org/ftp/Meetings_3GPP_ SYNC/RAN1/Docs/ [retrieved on 2015-05-24]

## Description

### TECHNICAL FIELD

Embodiments of the present invention relate to the communications field, and more specifically, to transmission and reception of a channel state information reference signal CSI-RS.

### BACKGROUND

In a wireless communications network, each device needs to transmit information by using a frequency resource, and the frequency resource is also referred to as a spectrum. Spectrums used in a wireless communications system include a licensed spectrum (Licensed Spectrum) and an unlicensed spectrum (Unlicensed Spectrum). The licensed spectrum can be used only after a grant is obtained, and the unlicensed spectrum can be legally used by anyone without needing a grant. A carrier on the licensed spectrum is referred to as a licensed carrier, and a carrier on the unlicensed spectrum is referred to as an unlicensed carrier.

In a licensed-assisted access using Long Term Evolution (Licensed-Assisted Access Using Long Term Evolution, "LAA-LTE" for short) system, a node uses an unlicensed carrier by using a listen before talk (Listen Before Talk, "LBT" for short) rule. LBT is a carrier sense multiple access (Carrier Sense Multiple Access, "CSMA" for short) technology.

A channel state information reference signal (Channel State Information-Reference Signal, "CSI-RS" for short) is a downlink reference signal used for obtaining channel state information by user equipment UE. In the LAA-LTE system, after preempting a channel by using the LBT rule, an eNB sends a CSI-RS to the UE. The CSI-RS may be periodically or aperiodically transmitted in a time domain. When the CSI-RS is periodically transmitted, the eNB obtains the channel by means of preemption at a random moment, and a location (that is a moment) for sending the CSI-RS is determined. Therefore, the CSI-RS cannot be sent to the UE in time, and consequently the UE cannot obtain channel state information in time. Moreover, when the CSI-RS is aperiodically transmitted, the eNB needs to frequently send signaling to the UE to indicate a location for sending the CSI-RS each time, and signaling overheads are relatively high.

LG ELECTRONICS: "CSI support in LAA", 3GPP DRAFT; R1-152738, vol.RAN WG1, no. Fukuoka, Japan; 20150525-20150529 (2015-05-24), URL: http://www.3gpp.org/ftp/Meetings_3GPP_SYNC/RAN1/Docs/, suggests both CRS based TM and CSI-RS/URS based TM on unlicensed carrier, and considers both aperiodic CSI feedback triggered by DCI and periodic CSI feedback configured by RRC for unlicensed carrier.

US 2014/0286184 A1 discloses a method for receiving a Channel State Information-Reference Signal (CSI-RS) for measuring a channel includes: receiving CSI-RSs on resource elements (REs) in a subframe configured for the CSI-RSs from a base station, wherein if each CSI-RS of the received CSI-RSs is transmitted from each of four or more transmit antenna ports of the base station, at least two REs on which each CSI-RS is received are associated with each of the four or more transmit antenna ports; and transmitting channel state information based on the received CSI-RSs.

### SUMMARY

The present invention is as defined in the appended independent claims. Embodiments of the present invention provide a method and device for transmitting a channel state information reference signal CSI-RS, so that a CSI-RS can be flexibly sent to a receive end device, without requiring high signaling overheads.

According to a first aspect, a method is provided according to claim 1 and further detailed in the dependent claims referring back to this claim.

According to a second aspect, a method is provided according to claim 7 and further detailed in the dependent claims referring back to this claim.

According to a third aspect, a device is provided according to claim 13 and further detailed in the dependent claims referring back to this claim.

According to a fourth aspect, a device is provided according to claim 15 and further detailed in the dependent claims referring back to this claim.

Based on the foregoing technical solutions, in the embodiments of the present invention, after obtaining the unlicensed carrier by using an LBT procedure, a transmit end device determines the target CSI-RS from the M pre-configured groups of CSI-RSs, where each group of CSI-RSs in the M groups of CSI-RSs is periodically sent in the time domain, and different groups of CSI-RSs in the M groups of CSI-RSs have different sending periods and offsets as claimed, and the transmit end device sends the target CSI-RS to a receive end device at the start sending moment of the target CSI-RS. Compared with the prior art, in the embodiments of the present invention, a sending location (that is, a sending moment) can be flexibly selected to send the CSI-RS to the receive end device, without requiring signaling overheads.

### BRIEF DESCRIPTION OF DRAWINGS

To describe the technical solutions in the embodiments of the present invention more clearly, the following briefly describes the accompanying drawings required for describing the embodiments or the prior art. Apparently, the accompanying drawings in the following description show merely some examples, and a person of ordinary skill in the art understands that the present invention is defined by the appended claims and limited only by their scope. Any embodiment and/or aspect (of the invention and/or disclosure) referred to in this description and not fully falling within the scope of said appended claims is to be interpreted as an example useful for understanding the present invention.
FIG. 1 shows a schematic flowchart of a method for transmitting a CSI-RS according to an embodiment of the present invention;
FIG. 2 shows a schematic diagram of a method for transmitting a CSI-RS according to an embodiment of the present invention;
FIG. 3 shows another schematic diagram of a method for transmitting a CSI-RS according to an embodiment of the present invention;
FIG. 4 shows a schematic flowchart of a method for receiving a CSI-RS according to an embodiment of the present invention;
FIG. 5 shows a schematic block diagram of a device for transmitting a CSI-RS according to an embodiment of the present invention;
FIG. 6 shows another schematic block diagram of a device for receiving a CSI-RS according to an embodiment of the present invention;
FIG. 7 shows still another schematic block diagram of a device for transmitting a CSI-RS according to an embodiment of the present invention; and
FIG. 8 shows still another schematic block diagram of a device for receiving a CSI-RS according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments referred to in this description and not fully falling within the scope of said appended claims is to be interpreted as an example useful for understanding the present invention, the scope of which is solely defined by the scope of the appended claims.

A device in the embodiments of the present invention may be a device in a licensed-assisted access using Long Term Evolution (Licensed-Assisted Access Using Long Term Evolution, "LAA-LTE" for short) system, or may be a device in another system, for example, a Long Term Evolution (Long Term Evolution, "LTE" for short) system, an LTE frequency division duplex (Frequency Division Duplex, "FDD" for short) system, an LTE time division duplex (Time Division Duplex, "TDD" for short) system, a Global System for Mobile Communications (Global System for Mobile Communications, "GSM" for short), a Code Division Multiple Access (Code Division Multiple Access, "CDMA" for short) system, a Wideband Code Division Multiple Access (Wideband Code Division Multiple Access, "WCDMA" for short) system, a general packet radio service (General Packet Radio Service, "GPRS" for short) system, or a Universal Mobile Telecommunication System (Universal Mobile Telecommunication System, "UMTS" for short), and this is not limited in the embodiments of the present invention.

Optionally, the device in the embodiments of the present invention may be user equipment, or may be a network side device, and this is not limited in the embodiments of the present invention.

The user equipment (User Equipment, "UE" for short) may also be referred to as a terminal device, a mobile station (Mobile Station, "MS" for short), a mobile terminal (Mobile Terminal), or the like. The terminal device may communicate with one or more core networks by using a radio access network (Radio Access Network, RAN). For example, the terminal device may be a mobile phone (or referred to as a "cellular" phone) or a computer with a mobile terminal. For example, the terminal device may also be a portable, pocket-sized, handheld, computer built-in, or in-vehicle mobile apparatus, which exchanges voice and/or data with the radio access network. The network side device may be a base station, specifically, may be an evolved NodeB (evolved NodeB, "eNB" or "eNodeB" for short) in a Long Term Evolution (Long Term Evolution, "LTE" for short) system, and the network side device may further be an access point (Access Point, "AP" for short) device.

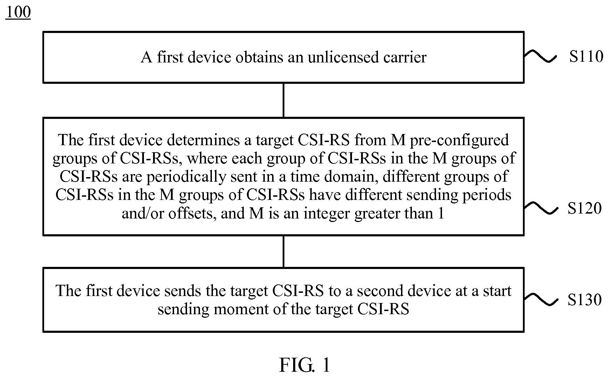

FIG. 1 shows a method 100 for transmitting a channel state information reference signal CSI-RS according to an embodiment of the present invention, and the method 100 includes:
S110. A first device obtains an unlicensed carrier.
S120. The first device determines a target CSI-RS from M pre-configured groups of CSI-RSs, where each group of CSI-RSs in the M groups of CSI-RSs are periodically sent in a time domain, different groups of CSI-RSs in the M groups of CSI-RSs have different sending periods and/or offsets, and M is an integer greater than 1.
S130. The first device sends the target CSI-RS to a second device based on the unlicensed carrier at a start sending moment of the target CSI-RS.

Specifically, for example, the first device preempts a channel by using an LBT rule, to obtain the unlicensed carrier.

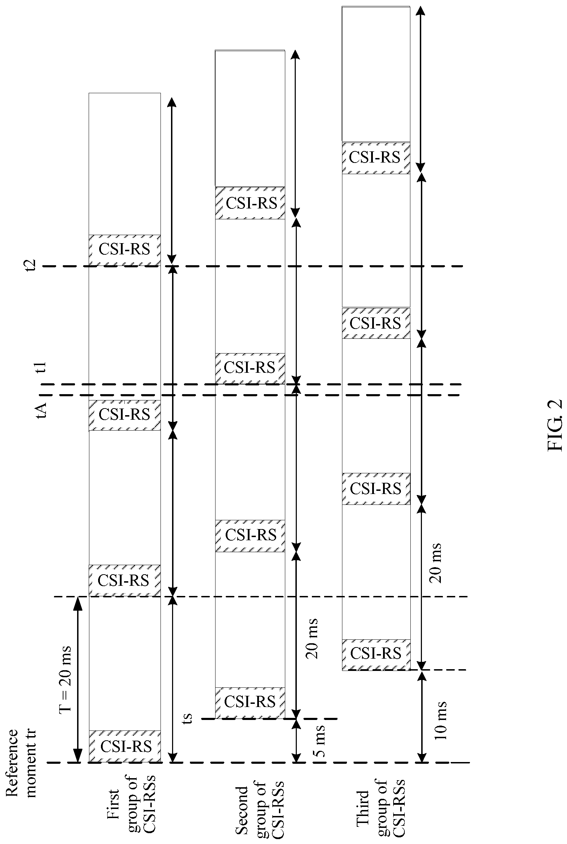

It should be understood that in this embodiment of the present invention, each group of CSI-RSs in the M groups of CSI-RSs includes a group of CSI-RSs that are periodically sent in the time domain. Specifically, as shown in FIG. 2, each group of CSI-RSs includes a sequence of CSI-RSs that are periodically sent in the time domain. Different groups of CSI-RSs in the M groups of CSI-RSs have different sending periods and/or offsets. In other words, not all start sending moments of CSI-RSs in different groups of CSI-RSs are the same. As shown in FIG. 2, start sending moments of CSI-RSs in a first group of CSI-RSs are totally different from start sending moments of CSI-RSs in a second group of CSI-RSs.

It should be further understood that the target CSI-RS is a CSI-RS that is in a group of periodically-sent CSI-RSs in the M groups of CSI-RSs, and the start sending moment of the target CSI-RS is later than a moment (denoted as a first moment) at which the first device is allowed to start to send data on the unlicensed carrier, or the start sending moment of the target CSI-RS and the first moment are a same moment. Specifically, for example, the first device obtains the unlicensed carrier, the moment at which the first device is allowed to start to send data on the unlicensed carrier is a moment tA shown in FIG. 2, the third CSI-RS in the second group of CSI-RSs shown in FIG. 2 may be used as the target CSI-RS, or the third CSI-RS in a third group of CSI-RSs may be used as the target CSI-RS, or the fourth CSI-RS in the first group of CSI-RSs may be used as the target CSI-RS, and this is not limited in this embodiment of the present invention.

Specifically, it is assumed that the third CSI-RS in the second group of CSI-RSs is used as the target CSI-RS in S120. In this case, the first device sends the target CSI-RS to the second device based on the obtained unlicensed carrier at the start sending moment (for example, a moment t1 shown in FIG. 2) of the target CSI-RS.

It can be learned from the foregoing description that in this embodiment of the present invention, the M groups of CSI-RSs are pre-configured, each group of CSI-RSs in the M groups of CSI-RSs are periodically sent in the time domain, different groups of CSI-RSs in the M groups of CSI-RSs have different sending periods and/or offsets, and after obtaining the unlicensed carrier, a transmit end device determines the target CSI-RS from the M groups of CSI-RSs, and sends the target CSI-RS to a receive end device at the start sending moment of the target CSI-RS. In other words, in this embodiment of the present invention, a target location may be selected from multiple CSI-RS sending locations to send the CSI-RS to the receive end device. Compared with the prior art in which a CSI-RS is periodically transmitted, in this embodiment of the present invention, the CSI-RS can be flexibly sent to the receive end device.

It should be further understood that after the first device sends the target CSI-RS to the second device, the first device continues to send a CSI-RS to the second device at a corresponding location (moment) based on a sending period of the target CSI-RS. The sending period of the target CSI-RS is a sending period of a group of CSI-RSs to which the target CSI-RS belongs. Specifically, in an example in which the third CSI-RS in the second group of CSI-RSs shown in FIG. 2 is used as the target CSI-RS, after sending the target CSI-RS to the second device at the start sending moment t1 of the target CSI-RS, the first device continues to send a subsequent CSI-RS in the second group of CSI-RSs to the second device based on a start sending moment of the CSI-RS. In other words, in this embodiment of the present invention, from the start sending moment of the target CSI-RS at which the target CSI-RS is sent to the receive end device to a moment at which a channel is released, the first device transmits a CSI-RS to the second device always in a periodic transmission manner. Compared with the prior art in which a CSI-RS is aperiodically transmitted, in this embodiment of the present invention, no high signaling overheads are required.

Therefore, according to the method for transmitting a channel state information reference signal provided in this embodiment of the present invention, the CSI-RS can be flexibly sent to the receive end device, without requiring high signaling overheads. Optionally, in this embodiment of the present invention, that the first device determines a target CSI-RS from M pre-configured groups of CSI-RSs in S120 includes:
determining, by the first device, a CSI-RS whose start sending moment is closest to a first moment and that is in the M groups of CSI-RSs as the target CSI-RS, where the first moment is a moment at which the first device is allowed to start to send data on the unlicensed carrier.

Specifically, it is assumed that the M groups of CSI-RSs are the three groups of CSI-RSs shown in FIG. 2, and the first moment is the moment tA in FIG. 2. In this case, the target CSI-RS is the third CSI-RS in the second group of CSI-RSs.

In this embodiment of the present invention, after occupying the unlicensed carrier, the transmit end device determines the target CSI-RS from the M pre-configured groups of CSI-RSs, each group of CSI-RSs in the M groups of CSI-RSs are periodically sent in the time domain, and different groups of CSI-RSs in the M groups of CSI-RSs have different sending periods and/or offsets. In the M groups of CSI-RSs, a time interval between the start sending moment of the target CSI-RS and the moment at which the transmit end device is allowed to start to send data on the unlicensed carrier is shortest, and the transmit end device sends the target CSI-RS to the receive end device at the start sending moment of the target CSI-RS. Compared with the prior art, in this embodiment of the present invention, an interval between a moment at which data is allowed to start to be sent on an unlicensed carrier and a moment at which a CSI-RS starts to be sent to a receive end device can be effectively shortened, so that a CSI-RS can be sent to the receive end device in time.

Therefore, according to the method for transmitting a channel state information reference signal provided in this embodiment of the present invention, the CSI-RS can be sent to the receive end device in time, without requiring high signaling overheads. For example, the transmit end device is a base station, the receive end device is UE. The base station sends a CSI-RS to the UE according to the method provided in this embodiment of the present invention, so that the UE can obtain channel state information in time, and can report a channel state to the base station in time. In this way, the base station can make a corresponding scheduling decision according to a channel state report.

It should be understood that in this embodiment of the present invention, the first device occupies the unlicensed carrier by using an LBT technology, and the technology is the prior art. For brevity, details are not described herein.

It should be further understood that the first moment in this embodiment of the present invention is a moment at which the first device is allowed to start to send data after occupying the unlicensed carrier based on a contention mechanism. Specifically, if the first device occupies the unlicensed carrier based on a clear channel assessment (Clear Channel Assessment, "CCA" for short) process, the first moment may be an end moment of the CCA process. For another example, if the first device further needs to perform an extended CCA (Extended CCA, "ECCA" for short) process after the CCA process, the first moment is an end moment of the ECCA process. This is not limited in this embodiment of the present invention.

It should be understood that in S120, for example, the first device may also determine the target CSI-RS from the M pre-configured groups of CSI-RSs according to system preset information, and this is not limited in this embodiment of the present invention. It should be further understood that in this embodiment of the present invention, a sending period of a CSI-RS may be specifically set according to a length of a subframe that carries the CSI-RS. For example, the sending period may be any time length from 5 ms to 80 ms, or may be less than 5 ms, and this is not limited in this embodiment of the present invention.

Optionally, in this embodiment of the present invention, the M groups of CSI-RSs are pre-configured by a system.

Specifically, for example, the M groups of CSI-RSs may be pre-configured by radio resource control (Radio Resource Control, "RRC" for short).

For example, the RRC pre-configures the M groups of CSI-RSs, so that each group of CSI-RSs are periodically sent in the time domain, and different groups of CSI-RSs have different sending periods and/or offsets. The RRC notifies the receive end device (for example, UE) of information (including but not limited to an offset and a sending period) about the M groups of CSI-RSs, and after detecting a valid CSI-RS by means of blind detection, the receive end device can perform receiving at a corresponding location according to a known sending period.

Optionally, in this embodiment of the present invention, the M groups of CSI-RSs are pre-configured by the first device.

Specifically, for example, the first device is an eNodeB (Evolved Node-B) in an LTE system, and the eNodeB pre-configures the M groups of CSI-RSs, and notifies the receive end device (such as UE) of information (including but being not limited to an offset and a sending period) about the M groups of CSI-RSs.

It should be further understood that both the first device in a transmit end and the second device in a receive end know the M groups of CSI-RSs.

Optionally, in this embodiment of the present invention, different groups of CSI-RSs in the M groups of CSI-RSs have a same sending period and different offsets.

It should be understood that a sending period of a group of CSI-RSs is a time interval between sending moments of neighboring CSI-RSs in this group of CSI-RSs (for example, as shown in FIG. 2, a sending period of the first group of CSI-RSs is T = 20 ms). An offset of a group of CSI-RSs is a time interval between a signal start sending moment of this group of CSI-RSs (for example, a signal start sending moment ts of the second group of CSI-RSs shown in FIG. 2) and a reference moment (for example, a reference moment tr denoted in FIG. 2).

Specifically, FIG. 2 shows three pre-configured groups of CSI-RSs, a sending period of each group of CSI-RSs is 20 ms, an offset of the first group of CSI-RSs is 0 ms, an offset of the second group of CSI-RSs is 5 ms, and an offset of the third group of CSI-RSs is 10 ms.

For example, it is assumed that the moment (that is, the first moment) at which the first device is allowed to start to send data after occupying the unlicensed carrier is the reference moment tr shown in FIG. 2, and the target CSI-RS is determined from the three groups of CSI-RSs shown in FIG. 2. As shown in FIG. 2, a start sending moment of the first CSI-RS in the first group of CSI-RSs is the reference moment tr, that is, the start sending moment of the first CSI-RS is closest to the first moment. In this case, the first CSI-RS in the first group of CSI-RSs is determined as the target CSI-RS, and the target CSI-RS is sent to the second device at the start sending moment tr.

For another example, it is assumed that the moment (that is, the first moment) at which the first device is allowed to start to send data after occupying the unlicensed carrier is the moment tA shown in FIG. 2, and the target CSI-RS is determined from the three groups of CSI-RSs shown in FIG. 2. As shown in FIG. 2, a start sending moment t1 of the third CSI-RS in the second group of CSI-RSs is closest to the first moment tA this time. In this case, the third CSI-RS in the second group of CSI-RSs is determined as the target CSI-RS, and the target CSI-RS is sent to the second device at the start sending moment t1.

In the prior art, one configuration is used to periodically transmit a CSI-RS, for example, a CSI-RS is sent to a receive end only based on the first group of CSI-RSs shown in FIG. 2. It is assumed that the moment (that is, the first moment) at which the first device is allowed to start to send data after occupying the unlicensed carrier is the moment tA shown in FIG. 2. As shown in FIG. 2, the first device can send a CSI-RS to the second device only when a start sending moment t2 of the fourth CSI-RS in the first group of CSI-RSs arrives, that is, cannot send a CSI-RS to the receive end device in time.

It can be learned from the foregoing description that in this embodiment of the present invention, multiple groups of CSI-RSs are pre-configured, and not all sending locations of CSI-RSs in different groups of CSI-RSs are the same. After the unlicensed carrier is occupied, the target CSI-RS whose start sending moment is closest to the moment at which data is allowed to start to be sent on the unlicensed carrier is selected from the multiple groups of CSI-RSs, and then the target CSI-RS is sent to the receive end device. In this way, a CSI-RS can be sent to the receive end device in time, or in other words, a chance for sending a CSI-RS can be increased, thereby improving CSI-RS transmission efficiency.

It should be understood that after sending the target CSI-RS to the second device at the start sending moment of the target CSI-RS, the first device periodically sends a CSI-RS to the second device at a corresponding sending moment according to a sending period corresponding to the target CSI-RS. Specifically, in the example shown in FIG. 2, after sending the third CSI-RS (that is, the target CSI-RS) in the second group of CSI-RSs to the second device at the moment t1, the first device continues to send a subsequent CSI-RS in the second group of CSI-RSs to the second device.

It should be further understood that FIG. 2 is merely an example instead of a limitation. For example, in actual application, the M groups of CSI-RSs may be three groups of CSI-RSs, or may be five, ten, or more groups. For another example, an offset and a sending period of each group of CSI-RSs are not limited to the case shown in FIG. 2. For example, a sending period of a CSI-RS may be any time length from 5 ms to 80 ms, and an offset of a CSI-RS is, for example, 3 ms, 7 ms, or another time length. These are not limited in this embodiment of the present invention.

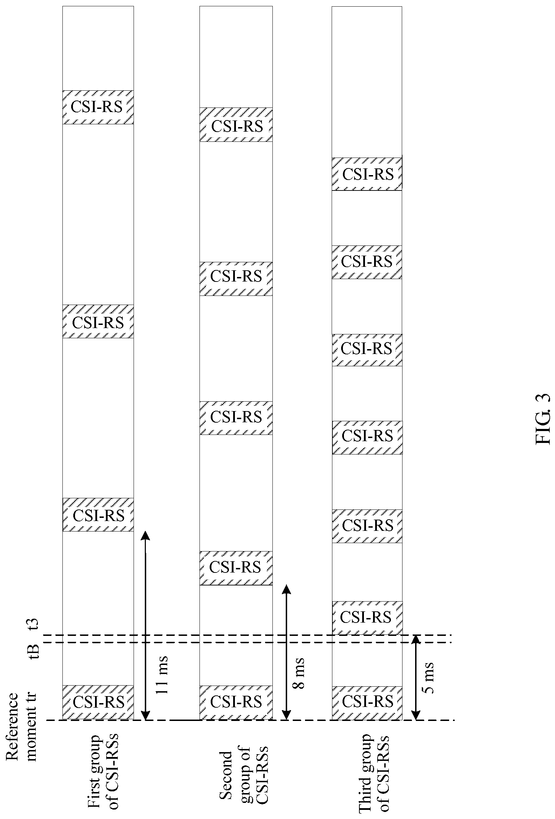

Optionally, in this embodiment of the present invention, different groups of CSI-RSs in the M groups of CSI-RSs have different sending periods and a same offset. Specifically, FIG. 3 shows three pre-configured groups of CSI-RSs, an offset of each group of CSI-RSs is 0 ms, a sending period of a first group of CSI-RSs is 11 ms, a sending period of a second group of CSI-RSs is 8 ms, and a sending period of a third group of CSI-RSs is 5 ms.

For example, it is assumed that the moment (that is, the first moment) at which the first device is allowed to start to send data after occupying the unlicensed carrier is a reference moment tr shown in FIG. 3, and the target CSI-RS is determined from the three groups of CSI-RSs shown in FIG. 3. As shown in FIG. 3, start sending moments of the first CSI-RSs in the three groups of CSI-RSs are the reference moment tr, and the first CSI-RS of any group of CSI-RSs in the three groups of CSI-RSs may be selected as the target CSI-RS for sending. For example, the first CSI-RS of the first group of CSI-RSs is selected as the target CSI-RS, and the target CSI-RS is sent to the second device at the start sending moment tr.

For another example, it is assumed that the moment (that is, the first moment) at which the first device is allowed to start to send data after occupying the unlicensed carrier is a moment tB shown in FIG. 3, and the target CSI-RS is selected from the three groups of CSI-RSs shown in FIG. 3. As shown in FIG. 3, a start sending moment t1 of the second CSI-RS in the third group of CSI-RSs is closest to the first moment tB this time. In this case, the second CSI-RS in the third group of CSI-RSs is determined as the target CSI-RS, and the target CSI-RS is sent to the second device at the start sending moment t3.

It can be learned from the foregoing description that in this embodiment of the present invention, multiple groups of CSI-RSs are pre-configured, and not all sending locations of CSI-RSs in different groups of CSI-RSs are the same. After the unlicensed carrier is occupied, the target CSI-RS whose start sending moment is closest to the moment at which data is allowed to start to be sent on the unlicensed carrier is selected from the multiple groups of CSI-RSs, and then the target CSI-RS is sent to the receive end device. In this way, a CSI-RS can be sent to the receive end device in time, or in other words, a chance for sending a CSI-RS can be increased, thereby improving CSI-RS transmission efficiency.

It should be understood that in this embodiment of the present invention, after sending the target CSI-RS to the second device at the start sending moment of the target CSI-RS, the first device continues to send a CSI-RS to the second device according to the sending period of the target CSI-RS. Specifically, in the example shown in FIG. 3, after sending the second CSI-RS (that is, the target CSI-RS) in the third group of CSI-RSs to the second device at the moment t3, the first device continues to send a subsequent CSI-RS in the third group of CSI-RSs to the second device.

It should be further understood that FIG. 3 is merely an example instead of a limitation. For example, in actual application, the M groups of CSI-RSs may be three groups of CSI-RSs, or may be five, ten, or more groups. For another example, an offset and a sending period of each group of CSI-RSs are not limited to the case shown in FIG. 3. For example, a sending period of a CSI-RS may be any time length from 5 ms to 80 ms, and an offset of a CSI-RS is, for example, 3 ms, 7 ms, or another time length. These are not limited in this embodiment of the present invention.

Optionally, in this embodiment of the present invention, different groups of CSI-RSs in the M groups of CSI-RSs have different sending periods and different offsets.

Specifically, for example, in FIG. 2, sending periods of the three groups of CSI-RSs are different from each other. For example, a sending period of the first group of CSI-RSs is 20 ms, a sending period of the second group of CSI-RSs is 15 ms, and a sending period of the third group of CSI-RSs is 25 ms.

For another example, in FIG. 3, offsets of the three groups of CSI-RSs are different from each other. For example, an offset of the first group of CSI-RSs is 1 ms, an offset of the second group of CSI-RSs is 3 ms, and an offset of the third group of CSI-RSs is 10 ms.

It should be understood that the foregoing example is not a limitation, and in actual application, a sending period and an offset of each group of CSI-RSs in the M groups of CSI-RSs may be other time lengths.

Optionally, in this embodiment of the present invention, the method 100 further includes:
S140. The first device sends, to the second device, an indication message used for indicating the start sending moment of the target CSI-RS.

Specifically, the indication message may further include information used for indicating an offset and/or a sending period of the target CSI-RS. It should be understood that the offset of the target CSI-RS mentioned herein is an offset of a group of CSI-RSs to which the target CSI-RS belongs, and the sending period of the target CSI-RS is a sending period of the group CSI-RSs to which the target CSI-RS belongs.

For example, the target CSI-RS is a CSI-RS in a K^{th} group of CSI-RSs in the M groups of CSI-RSs, and the first device sends, to the second device, an indication message used for indicating a start sending moment of the target CSI-RS, and an offset and a sending period of the K^{th} group of CSI-RSs.

It should be further understood that, if the sending period of the target CSI-RS is the same as that of a CSI-RS sent after the first device previously occupies an unlicensed carrier, and only the offset is changed (for example, as shown in FIG. 2), the first device only needs to notify the second device of the start sending moment of the target CSI-RS and the offset of the group of CSI-RSs to which the target CSI-RS belongs. If the offset of the target CSI-RS is the same as that of a CSI-RS sent after the first device previously occupies an unlicensed carrier, and only the sending period is changed (for example, as shown in FIG. 3), the first device only needs to notify the second device of the start sending moment and the sending period of the target CSI-RS.

It should be understood that a sequence of S130 and S140 is not limited in this embodiment of the present invention.

It should be understood that in this embodiment of the present invention, the first device may further notify the second device of the start sending moment and the offset and/or the sending period of the target CSI-RS in an implicit manner, and this is not limited in this embodiment of the present invention.

It should be understood that, alternatively, the RRC may perform pre-configuration to reduce signaling overheads. For example, the RRC pre-configures the M groups of CSI-RSs, so that each group of CSI-RSs are periodically sent in the time domain, and different groups of CSI-RSs have different sending periods and/or offsets. The RRC notifies the receive end device (for example, UE) of information (including but not limited to an offset and a sending period) about the M groups of CSI-RSs, and after detecting a valid CSI-RS by means of blind detection, the receive end device can perform receiving at a corresponding location according to a known sending period. Therefore, in this embodiment of the present invention, multiple groups of CSI-RSs are pre-configured, and different groups of CSI-RSs have different offsets and/or sending periods. After the unlicensed carrier is occupied, the target CSI-RS whose start sending moment is closest to the moment at which data is allowed to start to be sent on the unlicensed carrier is selected from the multiple groups of CSI-RSs, and then the target CSI-RS is sent to the receive end device. In this way, a CSI-RS can be sent to the receive end device in time, or in other words, a chance for sending a CSI-RS can be increased, thereby improving CSI-RS transmission efficiency. In addition, the M groups of CSI-RSs may be pre-configured by the RRC, and after detecting a valid CSI-RS by means of blind detection, the receive end device can perform receiving at a corresponding location according to a known sending period. That is, in this embodiment of the present invention, the transmit end device does not necessarily send, to the receive end device, signaling used for indicating information about the target CSI-RS, so that the signaling overheads can be reduced.

Optionally, this embodiment of the present invention further provides a method for determining a channel state information reference signal CSI-RS, and the method includes:
pre-configuring M groups of CSI-RSs, where each group of CSI-RSs in the M groups of CSI-RSs are periodically sent in a time domain, different groups of CSI-RSs have different sending periods and/or offsets, and M is an integer greater than 1.

Specifically, each group of CSI-RSs in the M groups of CSI-RSs includes a group of CSI-RSs that are periodically sent in the time domain. Specifically, as shown in FIG. 2, each group of CSI-RSs includes a sequence of CSI-RSs that are periodically sent in the time domain. Different groups of CSI-RSs in the M groups of CSI-RSs have different sending periods and/or offsets. In other words, not all start sending moments of CSI-RSs in different groups of CSI-RSs are the same. As shown in FIG. 2, the start sending moments of the CSI-RSs in the first group of CSI-RSs are totally different from the start sending moments of the CSI-RSs in the second group of CSI-RSs.

It should be understood that this embodiment of the present invention may be executed by a transmit end device such as an eNB or an RRC, and this is not limited in this embodiment of the present invention.

It should be further understood that after the M groups of CSI-RSs are pre-configured, the transmit end device and the receive end device are notified of the M groups of CSI-RSs.

Optionally, in this embodiment of the present invention, different groups of CSI-RSs in the M groups of CSI-RSs have a same sending period and different offsets.

Details are shown in FIG. 2 and are not repeatedly described herein.

Optionally, in this embodiment of the present invention, different groups of CSI-RSs in the M groups of CSI-RSs have different sending periods and a same offset.

Details are shown in FIG. 3 and are not repeatedly described herein.

Optionally, in this embodiment of the present invention, different groups of CSI-RSs in the M groups of CSI-RSs have different sending periods and different offsets. Specifically, for example, in FIG. 2, sending periods of the three groups of CSI-RSs are different from each other. For example, a sending period of the first group of CSI-RSs is 20 ms, a sending period of the second group of CSI-RSs is 15 ms, and a sending period of the third group of CSI-RSs is 25 ms.

For another example, in FIG. 3, offsets of the three groups of CSI-RSs are different from each other. For example, an offset of the first group of CSI-RSs is 1 ms, an offset of the second group of CSI-RSs is 3 ms, and an offset of the third group of CSI-RSs is 10 ms.

It should be understood that the foregoing example is not a limitation, and in actual application, a sending period and an offset of each group of CSI-RSs in the M groups of CSI-RSs may be other time lengths.

The foregoing describes the method for transmitting a channel state information reference signal provided in the embodiments of the present invention from a perspective of the transmit end device (the first device) with reference to FIG. 1 to FIG. 3.

The following describes a method for receiving a channel state information reference signal provided in an embodiment of the present invention from a perspective of a receive end device (a second device).

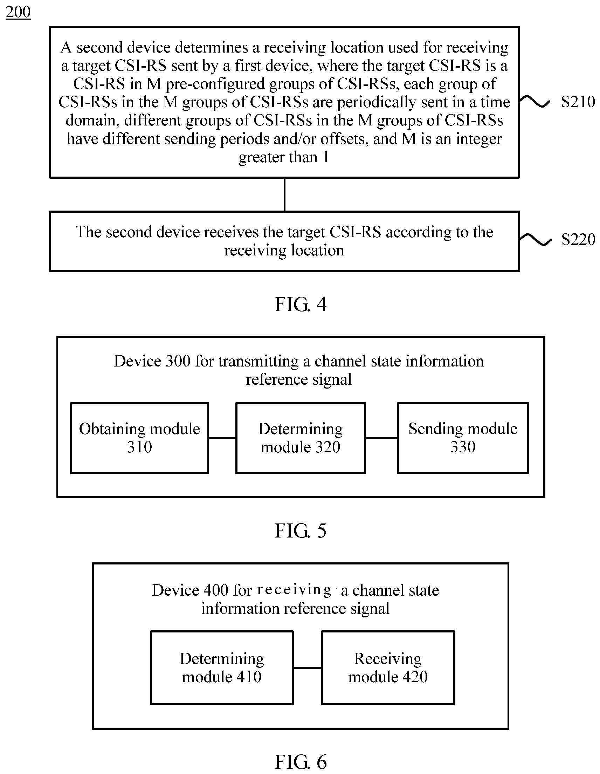

FIG. 4 shows a schematic flowchart of a method 200 for receiving a channel state information reference signal according to an embodiment of the present invention.

S210. A second device determines a receiving location used for receiving a target CSI-RS sent by a first device, where the target CSI-RS is a CSI-RS in M pre-configured groups of CSI-RSs, each group of CSI-RSs in the M groups of CSI-RSs are periodically sent in a time domain, different groups of CSI-RSs in the M groups of CSI-RSs have different sending periods and/or offsets, and M is an integer greater than 1.

S220. The second device receives the target CSI-RS at the receiving location based on an unlicensed carrier obtained by the first device.

It should be understood that in this embodiment of the present invention, each group of CSI-RSs in the M groups of CSI-RSs includes a group of CSI-RSs that are periodically sent in the time domain. Specifically, as shown in FIG. 2, each group of CSI-RSs includes a sequence of CSI-RSs that are periodically sent in the time domain. Different groups of CSI-RSs in the M groups of CSI-RSs have different sending periods and/or offsets. In other words, not all start sending moments of CSI-RSs in different groups of CSI-RSs are the same. As shown in FIG. 2, start sending moments of CSI-RSs in a first group of CSI-RSs are totally different from start sending moments of CSI-RSs in a second group of CSI-RSs.

It should be further understood that the target CSI-RS is a CSI-RS that is in a group of periodically-sent CSI-RSs in the M groups of CSI-RSs, and the start sending moment of the target CSI-RS is later than a moment (denoted as a first moment) at which the first device is allowed to start to send data on the unlicensed carrier, or the start sending moment of the target CSI-RS and the first moment are a same moment. Specifically, for example, the first device obtains the unlicensed carrier, the moment at which the first device is allowed to start to send data on the unlicensed carrier is a moment tA shown in FIG. 2, the third CSI-RS in the second group of CSI-RSs shown in FIG. 2 may be used as the target CSI-RS, or the third CSI-RS in a third group of CSI-RSs may be used as the target CSI-RS, or the fourth CSI-RS in the first group of CSI-RSs may be used as the target CSI-RS, and this is not limited in this embodiment of the present invention.

Specifically, it is assumed that the third CSI-RS in the second group of CSI-RSs is used as the target CSI-RS in S120. In this case, the first device sends the target CSI-RS to the second device based on the obtained unlicensed carrier at the start sending moment (for example, a moment t1 shown in FIG. 2) of the target CSI-RS.

It can be learned from the foregoing description that in this embodiment of the present invention, the M groups of CSI-RSs are pre-configured, each group of CSI-RSs in the M groups of CSI-RSs are periodically sent in the time domain, different groups of CSI-RSs in the M groups of CSI-RSs have different sending periods and/or offsets, and after obtaining the unlicensed carrier, a transmit end device determines the target CSI-RS from the M groups of CSI-RSs, and sends the target CSI-RS to a receive end device at the start sending moment of the target CSI-RS. In other words, in this embodiment of the present invention, a target location may be selected from multiple CSI-RS sending locations to send the CSI-RS to the receive end device. Compared with the prior art in which a CSI-RS is periodically transmitted, in this embodiment of the present invention, the CSI-RS can be flexibly sent to the receive end device.

It should be further understood that after the first device sends the target CSI-RS to the second device, the first device continues to send a CSI-RS to the second device at a corresponding location (moment) based on a sending period of the target CSI-RS. The sending period of the target CSI-RS is a sending period of a group of CSI-RSs to which the target CSI-RS belongs. Specifically, in an example in which the third CSI-RS in the second group of CSI-RSs shown in FIG. 2 is used as the target CSI-RS, after sending the target CSI-RS to the second device at the start sending moment t1 of the target CSI-RS, the first device continues to send a subsequent CSI-RS in the second group of CSI-RSs to the second device based on a start sending moment of the CSI-RS. In other words, in this embodiment of the present invention, from the start sending moment of the target CSI-RS at which the target CSI-RS is sent to the receive end device to a moment at which a channel is released, the first device transmits a CSI-RS to the second device always in a periodic transmission manner. Compared with the prior art in which a CSI-RS is aperiodically transmitted, in this embodiment of the present invention, no high signaling overheads are required.

Therefore, according to this embodiment of the present invention, the CSI-RS can be flexibly sent to the receive end device, without requiring high signaling overheads. Optionally, in this embodiment of the present invention, the target CSI-RS is a CSI-RS whose start sending moment is closest to the first moment and that is in the M groups of CSI-RSs, and the first moment is a moment at which the first device is allowed to start to send data on the unlicensed carrier.

Therefore, in this embodiment of the present invention, after the transmit end device occupies the unlicensed carrier, the target CSI-RS is determined from the M pre-configured groups of CSI-RSs, a time interval between the start sending moment of the target CSI-RS and the moment at which data is allowed to start to be sent on the unlicensed carrier is shortest, and the transmit end device sends the target CSI-RS to the receive end device at the start sending moment of the target CSI-RS. Compared with the prior art, in this embodiment of the present invention, an interval between a moment at which data is allowed to start to be sent on an unlicensed carrier and a start sending moment at which a CSI-RS is sent to the receive end device can be effectively shortened, so that a CSI-RS can be sent to the receive end device in time. For example, the transmit end device is a base station, the receive end device is UE. The base station sends a CSI-RS to the UE according to the method provided in this embodiment of the present invention, so that the UE can obtain channel state information in time, and can report a channel state to the base station in time. In this way, the base station can make a corresponding scheduling decision according to a channel state report.

It should be understood that the second device determines a receiving location of a CSI-RS, and then may receive the CSI-RS at the corresponding location according to a learned sending period. Specifically, the second device may learn the receiving location of the CSI-R by means of blind detection or by receiving an indication message sent by the first device at a receive end.

Optionally, in this embodiment of the present invention, in S210, that a second device determines a receiving location used for receiving a target CSI-RS sent by a first device includes:
determining, by the second device, the receiving location by means of blind detection or by receiving an indication message that is sent by the first device and that is used for indicating the receiving location.

Specifically, the second device receives the indication message that is sent by the first device and that is used for indicating the start sending moment and the offset and/or the sending period of the target CSI-RS, and the second device determines, according to the indication message, the receiving location for receiving the target CSI-RS.

Alternatively, an RRC may perform pre-configuration. For example, the RRC pre-configures the M groups of CSI-RSs, so that each group of CSI-RSs are periodically sent in the time domain, and different groups of CSI-RSs have different sending periods and/or offsets. The RRC notifies the receive end device (for example, UE) of information (including but not limited to an offset and a sending period) about the M groups of CSI-RSs, and after detecting a valid CSI-RS by means of blind detection, the receive end device can perform receiving at a corresponding location according to a known sending period.

Optionally, in this embodiment of the present invention, different groups of CSI-RSs in the M groups of CSI-RSs have a same sending period and different offsets.

Specifically, as shown in FIG. 2, three groups of CSI-RSs are pre-configured, a sending period of each group of CSI-RSs is 20 ms, an offset of the first group of CSI-RSs is 0 ms, an offset of the second group of CSI-RSs is 5 ms, and an offset of the third group of CSI-RSs is 10 ms.

Optionally, in this embodiment of the present invention, different groups of CSI-RSs in the M groups of CSI-RSs have different sending periods and a same offset.

Specifically, as shown in FIG. 3, three groups of CSI-RSs are pre-configured, an offset of each group of CSI-RSs is 0, a sending period of a first group of CSI-RSs is 11 ms, a sending period of a second group of CSI-RSs is 8 ms, and a sending period of a third group of CSI-RSs is 5 ms.

Optionally, in this embodiment of the present invention, different groups of CSI-RSs in the M groups of CSI-RSs have different sending periods and different offsets. Specifically, for example, the sending periods of the three groups of CSI-RSs in FIG. 2 are different from each other; and for another example, the offsets of the three groups of CSI-RSs shown in FIG. 3 are different from each other.

For details about the M groups of CSI-RSs, refer to the foregoing description. For brevity, details are not described herein again.

Therefore, in this embodiment of the present invention, multiple groups of CSI-RSs are pre-configured, and different groups of CSI-RSs have different offsets and/or sending periods. After the unlicensed carrier is occupied, the target CSI-RS whose start sending moment is closest to the moment at which data is allowed to start to be sent on the unlicensed carrier is selected from the multiple groups of CSI-RSs, and then the target CSI-RS is sent to the receive end device. In this way, a CSI-RS can be sent to the receive end device in time, or in other words, a chance for sending a CSI-RS can be increased, thereby improving CSI-RS transmission efficiency. In addition, the transmit end device does not necessarily send, to the receive end device, signaling that is used for indicating information about the target CSI-RS. The RRC may pre-configure the M groups of CSI-RSs, and after detecting a valid CSI-RS by means of blind detection, the receive end may perform receiving at a corresponding location according to a known sending period, so that the signaling overheads can be reduced.

It should be further understood that sequence numbers of the foregoing processes do not mean execution sequences in various embodiments of the present invention. The execution sequences of the processes should be determined according to functions and internal logic of the processes, and should not be construed as any limitation on the implementation processes of the embodiments of the present invention.

The foregoing describes transmission and reception of a channel state information reference signal provided in the embodiments of the present invention with reference to FIG. 1 to FIG. 4. The following describes corresponding devices for transmission and reception of a channel state information reference signal provided in embodiments of the present invention with reference to FIG. 5 to FIG. 8.

FIG. 5 shows a schematic block diagram of a device 300 for transmitting a channel state information reference signal according to an embodiment of the present invention. The device 300 includes:
an obtaining module 310, configured to obtain an unlicensed carrier;
a determining module 320, configured to determine a target CSI-RS from M pre-configured groups of CSI-RSs, where each group of CSI-RSs in the M groups of CSI-RSs are periodically sent in a time domain, different groups of CSI-RSs in the M groups of CSI-RSs have different sending periods and/or offsets, and M is an integer greater than 1; and
a sending module 330, configured to send, based on the unlicensed carrier obtained by the obtaining module, the target CSI-RS to a second device at a start sending moment of the target CSI-RS determined by the determining module.

In this embodiment of the present invention, the M groups of CSI-RSs are pre-configured, each group of CSI-RSs in the M groups of CSI-RSs are periodically sent in the time domain, different groups of CSI-RSs in the M groups of CSI-RSs have different sending periods and/or offsets, and after obtaining the unlicensed carrier, a transmit end device determines the target CSI-RS from the M groups of CSI-RSs, and sends the target CSI-RS to a receive end device at the start sending moment of the target CSI-RS. In other words, in this embodiment of the present invention, a target location may be selected from multiple CSI-RS sending locations to send the CSI-RS to the receive end device. Compared with the prior art in which a CSI-RS is periodically transmitted, in this embodiment of the present invention, the CSI-RS can be flexibly sent to the receive end device.

It should be further understood that after the first device sends the target CSI-RS to the second device, the first device continues to send a CSI-RS to the second device at a corresponding location (moment) based on a sending period of the target CSI-RS. The sending period of the target CSI-RS is a sending period of a group of CSI-RSs to which the target CSI-RS belongs. Specifically, in an example in which the third CSI-RS in the second group of CSI-RSs shown in FIG. 2 is used as the target CSI-RS, after sending the target CSI-RS to the second device at the start sending moment t1 of the target CSI-RS, the first device continues to send a subsequent CSI-RS in the second group of CSI-RSs to the second device based on a start sending moment of the CSI-RS. In other words, in this embodiment of the present invention, from the start sending moment of the target CSI-RS at which the target CSI-RS is sent to the receive end device to a moment at which a channel is released, the first device transmits a CSI-RS to the second device always in a periodic transmission manner. Compared with the prior art in which a CSI-RS is aperiodically transmitted, in this embodiment of the present invention, no high signaling overheads are required.

Therefore, according to the device for transmitting a channel state information reference signal provided in this embodiment of the present invention, the CSI-RS can be flexibly sent to the receive end device, without requiring high signaling overheads. Optionally, in this embodiment of the present invention, the determining module is specifically configured to determine a CSI-RS whose start sending moment is closest to a first moment and that is in the M groups of CSI-RSs as the target CSI-RS, and the first moment is a moment at which the first device is allowed to start to send data on the unlicensed carrier.

In this embodiment of the present invention, after the unlicensed carrier is occupied, the target CSI-RS is determined from the M pre-configured groups of CSI-RSs, each group of CSI-RSs in the M groups of CSI-RSs are periodically sent in the time domain, different groups of CSI-RSs have different sending periods and/or offsets. In the M groups of CSI-RSs, a time interval between the start sending moment of the target CSI-RS and the moment at which data is allowed to start to be sent on the unlicensed carrier is shortest, and the target CSI-RS is sent to the receive end device at the start sending moment of the target CSI-RS. Compared with the prior art, in this embodiment of the present invention, an interval between a moment at which data is allowed to start to be sent on an unlicensed carrier and a moment at which a CSI-RS starts to be sent to the receive end device can be effectively shortened, so that a CSI-RS can be sent to the receive end device in time.

It should be understood that, compared with the prior art, in this embodiment of the present invention, when the unlicensed carrier is occupied, the CSI-RS is still periodically transmitted on the unlicensed carrier, without required high signaling overheads.

Therefore, according to the device for transmitting a channel state information reference signal provided in this embodiment of the present invention, the CSI-RS can be sent to the receive end device in time, without requiring high signaling overheads. Optionally, in this embodiment of the present invention, different groups of CSI-RSs in the M groups of CSI-RSs have a same sending period and different offsets. Optionally, in this embodiment of the present invention, different groups of CSI-RSs in the M groups of CSI-RSs have different sending periods and a same offset. Optionally, in this embodiment of the present invention, different groups of CSI-RSs in the M groups of CSI-RSs have different sending periods and different offsets. Optionally, in this embodiment of the present invention, the sending module is further configured to send, to the second device, an indication message used for indicating the start sending moment of the target CSI-RS.

Therefore, in this embodiment of the present invention, multiple groups of CSI-RSs are pre-configured, and different groups of CSI-RSs have different offsets and/or sending periods. After the unlicensed carrier is occupied, the target CSI-RS whose start sending moment is closest to the moment at which data is allowed to start to be sent on the unlicensed carrier is selected from the multiple groups of CSI-RSs, and then the target CSI-RS is sent to the receive end device. In this way, a CSI-RS can be sent to the receive end device in time, or in other words, a chance for sending a CSI-RS can be increased, thereby improving CSI-RS transmission efficiency. In addition, the M groups of CSI-RSs may be pre-configured by the RRC, and after detecting a valid CSI-RS by means of blind detection, the receive end can perform receiving at a corresponding location according to a known sending period. That is, in this embodiment of the present invention, the transmit end device does not necessarily send, to the receive end device, signaling used for indicating information about the target CSI-RS, so that the signaling overheads can be reduced.

It should be understood that the device 300 provided in this embodiment of the present invention may be corresponding to the first device in the method for transmitting a channel state information reference signal in the embodiment of the present invention, and the foregoing and other operations and/or functions of the modules of the device 300 are separately used to implement corresponding procedures of the methods in FIG. 1 to FIG. 4. For brevity, details are not described herein again. FIG. 6 shows a schematic block diagram of a device 400 for receiving a channel state information reference signal according to an embodiment of the present invention. The device 400 includes:
a determining module 410, configured to determine a receiving location used for receiving a target CSI-RS sent by a first device, where the target CSI-RS is a CSI-RS in M pre-configured groups of CSI-RSs, each group of CSI-RSs in the M groups of CSI-RSs are periodically sent in a time domain, different groups of CSI-RSs in the M groups of CSI-RSs have different sending periods and/or offsets, and M is an integer greater than 1; and
a receiving module 420, configured to receive, based on an unlicensed carrier obtained by the first device, the target CSI-RS at the receiving location determined by the determining module.

In this embodiment of the present invention, the M groups of CSI-RSs are pre-configured, each group of CSI-RSs in the M groups of CSI-RSs are periodically sent in the time domain, different groups of CSI-RSs in the M groups of CSI-RSs have different sending periods and/or offsets, and after obtaining the unlicensed carrier, a transmit end device determines the target CSI-RS from the M groups of CSI-RSs, and sends the target CSI-RS to a receive end device at the start sending moment of the target CSI-RS. In other words, in this embodiment of the present invention, a target location may be selected from multiple CSI-RS sending locations to send the CSI-RS to the receive end device. Compared with the prior art in which a CSI-RS is periodically transmitted, in this embodiment of the present invention, the CSI-RS can be flexibly sent to the receive end device.

It should be further understood that in this embodiment of the present invention, from the start sending moment of the target CSI-RS at which the target CSI-RS is sent to the receive end device to a moment at which a channel is released, the first device transmits a CSI-RS to the second device always in a periodic transmission manner. Compared with the prior art in which a CSI-RS is aperiodically transmitted, in this embodiment of the present invention, no high signaling overheads are required.

Therefore, according to the device for receiving a channel state information reference signal provided in this embodiment of the present invention, the CSI-RS can be flexibly sent to the receive end device, without requiring high signaling overheads. Optionally, in an embodiment, the target CSI-RS is a CSI-RS whose start sending moment is closest to the first moment and that is in the M groups of CSI-RSs, and the first moment is a moment at which the first device is allowed to start to send data on the unlicensed carrier.

Therefore, in this embodiment of the present invention, multiple groups of CSI-RSs are pre-configured, and different groups of CSI-RSs have different offsets and/or sending periods. After the unlicensed carrier is occupied, the target CSI-RS whose start sending moment is closest to the moment at which data is allowed to start to be sent on the unlicensed carrier is selected from the multiple groups of CSI-RSs, and then the target CSI-RS is sent to the receive end device. In this way, a CSI-RS can be sent to the receive end device in time, or in other words, a chance for sending a CSI-RS can be increased, thereby improving CSI-RS transmission efficiency. Optionally, in this embodiment of the present invention, different groups of CSI-RSs in the M groups of CSI-RSs have a same sending period and different offsets. Optionally, in this embodiment of the present invention, different groups of CSI-RSs in the M groups of CSI-RSs have different sending periods and a same offset. Optionally, in this embodiment of the present invention, different groups of CSI-RSs in the M groups of CSI-RSs have different sending periods and different offsets.

Optionally, in this embodiment of the present invention, the determining module is specifically configured to determine the receiving location by means of blind detection or by receiving an indication message that is sent by the first device and that is used for indicating the receiving location.

Therefore, in this embodiment of the present invention, multiple groups of CSI-RSs are pre-configured, and different groups of CSI-RSs have different offsets and/or sending periods. After the unlicensed carrier is occupied, the target CSI-RS whose start sending moment is closest to the moment at which data is allowed to start to be sent on the unlicensed carrier is selected from the multiple groups of CSI-RSs, and then the target CSI-RS is sent to the receive end device. In this way, a CSI-RS can be sent to the receive end device in time, or in other words, a chance for sending a CSI-RS can be increased, thereby improving CSI-RS transmission efficiency. In addition, the M groups of CSI-RSs may be pre-configured by the RRC, and after detecting a valid CSI-RS by means of blind detection, the receive end can perform receiving at a corresponding location according to a known sending period. That is, in this embodiment of the present invention, the transmit end device does not necessarily send, to the receive end device, signaling used for indicating information about the target CSI-RS, so that the signaling overheads can be reduced.

It should be understood that the device 400 provided in this embodiment of the present invention may be corresponding to the second device in the method for transmitting a channel state information reference signal in the embodiment of the present invention, and the foregoing and other operations and/or functions of the modules of the device 400 are separately used to implement the corresponding procedures of the methods in FIG. 1 to FIG. 4. For brevity, details are not described herein again.

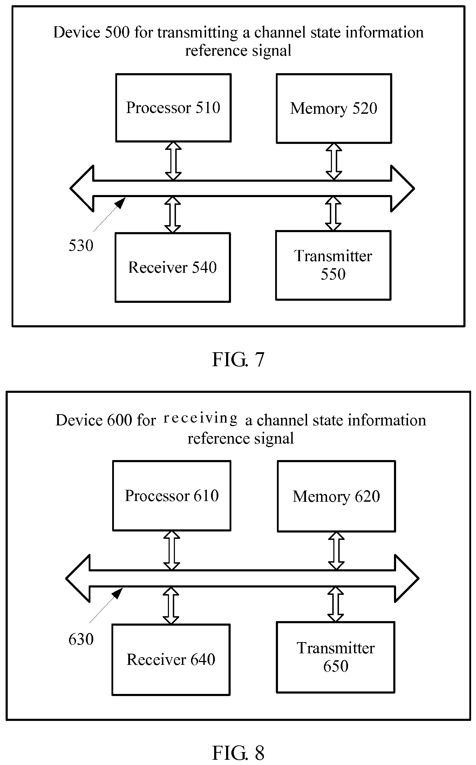

FIG. 7 shows a schematic block diagram of a device 500 for transmitting a channel state information reference signal according to an embodiment of the present invention. The device 500 includes a processor 510, a memory 520, a bus system 530, a receiver 540, and a transmitter 550. The processor 510, the memory 520, the receiver 540, and the transmitter 550 are connected to each other by using the bus system 530. The memory 520 is configured to store an instruction. The processor 510 is configured to execute the instruction stored in the memory 520, to control the receiver 540 to receive a signal and control the transmitter 550 to send a signal. The processor 510 is configured to: obtain an unlicensed carrier, and determine a target CSI-RS from M pre-configured groups of CSI-RSs, where each group of CSI-RSs in the M groups of CSI-RSs are periodically sent in a time domain, different groups of CSI-RSs in the M groups of CSI-RSs have different sending periods and/or offsets, and M is an integer greater than 1; and the transmitter 550 is configured to send the target CSI-RS to a second device at a start sending moment of the target CSI-RS.

It can be learned from the foregoing description that in this embodiment of the present invention, the M groups of CSI-RSs are pre-configured, each group of CSI-RSs in the M groups of CSI-RSs are periodically sent in the time domain, different groups of CSI-RSs in the M groups of CSI-RSs have different sending periods and/or offsets, and after obtaining the unlicensed carrier, a transmit end device determines the target CSI-RS from the M groups of CSI-RSs, and sends the target CSI-RS to a receive end device at the start sending moment of the target CSI-RS. In other words, in this embodiment of the present invention, a target location may be selected from multiple CSI-RS sending locations to send the CSI-RS to the receive end device. Compared with the prior art in which a CSI-RS is periodically transmitted, in this embodiment of the present invention, the CSI-RS can be flexibly sent to the receive end device.

It should be further understood that after the first device sends the target CSI-RS to the second device, the first device continues to send a CSI-RS to the second device at a corresponding location (moment) based on a sending period of the target CSI-RS. The sending period of the target CSI-RS is a sending period of a group of CSI-RSs to which the target CSI-RS belongs. Specifically, in an example in which the third CSI-RS in the second group of CSI-RSs shown in FIG. 2 is used as the target CSI-RS, after sending the target CSI-RS to the second device at the start sending moment t1 of the target CSI-RS, the first device continues to send a subsequent CSI-RS in the second group of CSI-RSs to the second device based on a start sending moment of the CSI-RS. In other words, in this embodiment of the present invention, from the start sending moment of the target CSI-RS at which the target CSI-RS is sent to the receive end device to a moment at which a channel is released, the first device transmits a CSI-RS to the second device always in a periodic transmission manner. Compared with the prior art in which a CSI-RS is aperiodically transmitted, in this embodiment of the present invention, no high signaling overheads are required.

Therefore, according to the device for transmitting a channel state information reference signal provided in this embodiment of the present invention, the CSI-RS can be flexibly sent to the receive end device, without requiring high signaling overheads.

Optionally, in this embodiment of the present invention, the processor 510 is specifically configured to determine a CSI-RS whose start sending moment is closest to a first moment and that is in the M groups of CSI-RSs as the target CSI-RS, and the first moment is a moment at which the first device is allowed to start to send data on the unlicensed carrier.

In this embodiment of the present invention, after the unlicensed carrier is occupied, the target CSI-RS is determined from the M pre-configured groups of CSI-RSs, each group of CSI-RSs in the M groups of CSI-RSs are periodically sent in the time domain, different groups of CSI-RSs have different sending periods and/or offsets. In the M groups of CSI-RSs, a time interval between the start sending moment of the target CSI-RS and the moment at which data is allowed to start to be sent on the unlicensed carrier is shortest, and the target CSI-RS is sent to the receive end device at the start sending moment of the target CSI-RS. Compared with the prior art, in this embodiment of the present invention, an interval between a moment at which data is allowed to start to be sent on an unlicensed carrier and a moment at which a CSI-RS starts to be sent to the receive end device can be effectively shortened, so that a CSI-RS can be sent to the receive end device in time.

It should be understood that, compared with the prior art, in this embodiment of the present invention, when the unlicensed carrier is occupied, the CSI-RS is still periodically transmitted on the unlicensed carrier, without required high signaling overheads.

Optionally, in this embodiment of the present invention, different groups of CSI-RSs in the M groups of CSI-RSs have a same sending period and different offsets. Optionally, in this embodiment of the present invention, different groups of CSI-RSs in the M groups of CSI-RSs have different sending periods and a same offset. Optionally, in this embodiment of the present invention, different groups of CSI-RSs in the M groups of CSI-RSs have different sending periods and different offsets. Optionally, in this embodiment of the present invention, the transmitter 550 is configured to send, to the second device, an indication message used for indicating the start sending moment of the target CSI-RS.

It should be understood that in this embodiment of the present invention, the processor 510 may be a central processing unit (Central Processing Unit, "CPU" for short), or the processor 510 may be another general-purpose processor, a digital signal processor (DSP), an application-specific integrated circuit (ASIC), a field programmable gate array (FPGA), another programmable logic device, a discrete gate or transistor logic device, a discrete hardware assembly, or the like. The general purpose processor may be a microprocessor, or the processor may be any normal processor, or the like.

The memory 520 may include a read-only memory and a random access memory, and provides an instruction and data for the processor 510. A part of the memory 520 may further include a nonvolatile random access memory. For example, the memory 520 may further store information about a device type.

In addition to a data bus, the bus system 530 may include a power bus, a control bus, a status signal bus, and the like. However, for clear description, various types of buses in the figure are marked as the bus system 530.

In an implementation process, steps in the foregoing methods may be completed by means of an integrated logic circuit of hardware in the processor 510 or an instruction in a form of software. The steps of the method disclosed with reference to the embodiments of the present invention may be directly performed by a hardware processor, or may be performed by using a combination of hardware in the processor and a software module. The software module may be located in a mature storage medium in the field, such as a random access memory, a flash memory, a read-only memory, a programmable read-only memory, an electrically-erasable programmable memory, or a register. The storage medium is located in the memory 520. The processor 510 reads information from the memory 520, and completes the steps of the foregoing methods in combination with the hardware. To avoid repetition, details are not described herein again.

Therefore, in this embodiment of the present invention, multiple groups of CSI-RSs are pre-configured, and different groups of CSI-RSs have different offsets and/or sending periods. After the unlicensed carrier is occupied, the target CSI-RS whose start sending moment is closest to the moment at which data is allowed to start to be sent on the unlicensed carrier is selected from the multiple groups of CSI-RSs, and then the target CSI-RS is sent to the receive end device. In this way, a CSI-RS can be sent to the receive end device in time, or in other words, a chance for sending a CSI-RS can be increased, thereby improving CSI-RS transmission efficiency. In addition, the M groups of CSI-RSs may be pre-configured by the RRC, and after detecting a valid CSI-RS by means of blind detection, the receive end can perform receiving at a corresponding location according to a known sending period. That is, in this embodiment of the present invention, the transmit end device does not necessarily send, to the receive end device, signaling used for indicating information about the target CSI-RS, so that the signaling overheads can be reduced.

It should be understood that the device 500 provided in this embodiment of the present invention may be corresponding to the first device in the method for transmitting a channel state information reference signal in the embodiment of the present invention, or may be corresponding to the device 300 according to the embodiment of the present invention, and the foregoing and other operations and/or functions of the modules of the device 500 are separately used to implement the corresponding procedures of the methods in FIG. 1 to FIG. 4. For brevity, details are not described herein again.

FIG. 8 shows a schematic block diagram of a device 600 for receiving a channel state information reference signal according to an embodiment of the present invention. The device 600 includes a processor 610, a memory 620, a bus system 630, a receiver 640, and a transmitter 660. The processor 610, the memory 620, the receiver 640, and the transmitter 650 are connected to each other by using the bus system 630. The memory 620 is configured to store an instruction. The processor 610 is configured to execute the instruction stored in the memory 620, to control the receiver 640 to receive a signal and control the transmitter 660 to send a signal. The processor 610 is configured to determine a receiving location used for receiving a target CSI-RS sent by a first device, where the target CSI-RS is a CSI-RS in M pre-configured groups of CSI-RSs, each group of CSI-RSs in the M groups of CSI-RSs are periodically sent in a time domain, different groups of CSI-RSs in the M groups of CSI-RSs have different sending periods and/or offsets, and M is an integer greater than 1; and the receiver 630 is configured to receive the target CSI-RS according to the receiving location.

In this embodiment of the present invention, the M groups of CSI-RSs are pre-configured, each group of CSI-RSs in the M groups of CSI-RSs are periodically sent in the time domain, different groups of CSI-RSs in the M groups of CSI-RSs have different sending periods and/or offsets, and after obtaining the unlicensed carrier, a transmit end device determines the target CSI-RS from the M groups of CSI-RSs, and sends the target CSI-RS to a receive end device at the start sending moment of the target CSI-RS. In other words, in this embodiment of the present invention, a target location may be selected from multiple CSI-RS sending locations to send the CSI-RS to the receive end device. Compared with the prior art in which a CSI-RS is periodically transmitted, in this embodiment of the present invention, the CSI-RS can be flexibly sent to the receive end device.

It should be further understood that in this embodiment of the present invention, from the start sending moment of the target CSI-RS at which the target CSI-RS is sent to the receive end device to a moment at which a channel is released, the first device transmits a CSI-RS to the second device always in a periodic transmission manner. Compared with the prior art in which a CSI-RS is aperiodically transmitted, in this embodiment of the present invention, no high signaling overheads are required.

Therefore, according to the device for receiving a channel state information reference signal provided in this embodiment of the present invention, the CSI-RS can be flexibly sent to the receive end device, without requiring high signaling overheads. Optionally, in this embodiment of the present invention, the processor 610 is specifically configured to determine a CSI-RS whose start sending moment is closest to a first moment and that is in the M groups of CSI-RSs as the target CSI-RS, and the first moment is a moment at which the first device is allowed to start to send data on the unlicensed carrier.

Therefore, in this embodiment of the present invention, multiple groups of CSI-RSs are pre-configured, and different groups of CSI-RSs have different offsets and/or sending periods. After the unlicensed carrier is occupied, the target CSI-RS whose start sending moment is closest to the moment at which data is allowed to start to be sent on the unlicensed carrier is selected from the multiple groups of CSI-RSs, and then the target CSI-RS is sent to the receive end device. In this way, a CSI-RS can be sent to the receive end device in time, or in other words, a chance for sending a CSI-RS can be increased, thereby improving CSI-RS transmission efficiency. Optionally, in this embodiment of the present invention, different groups of CSI-RSs in the M groups of CSI-RSs have a same sending period and different offsets. Optionally, in this embodiment of the present invention, different groups of CSI-RSs in the M groups of CSI-RSs have different sending periods and a same offset. Optionally, in this embodiment of the present invention, different groups of CSI-RSs in the M groups of CSI-RSs have different sending periods and different offsets. Optionally, in this embodiment of the present invention, the processor 610 is configured to determine the receiving location by means of blind detection or by receiving an indication message that is sent by the first device and that is used for indicating the receiving location.

Therefore, in this embodiment of the present invention, multiple groups of CSI-RSs are pre-configured, and different groups of CSI-RSs have different offsets and/or sending periods. After the unlicensed carrier is occupied, the target CSI-RS whose start sending moment is closest to the moment at which data is allowed to start to be sent on the unlicensed carrier is selected from the multiple groups of CSI-RSs, and then the target CSI-RS is sent to the receive end device. In this way, a CSI-RS can be sent to the receive end device in time, or in other words, a chance for sending a CSI-RS can be increased, thereby improving CSI-RS transmission efficiency. In addition, the M groups of CSI-RSs may be pre-configured by the RRC, and after detecting a valid CSI-RS by means of blind detection, the receive end can perform receiving at a corresponding location according to a known sending period. That is, in this embodiment of the present invention, the transmit end device does not necessarily send, to the receive end device, signaling used for indicating information about the target CSI-RS, so that the signaling overheads can be reduced.

It should be understood that the device 600 provided in this embodiment of the present invention may be corresponding to the second device in the method for transmitting a channel state information reference signal in the embodiment of the present invention, or may be corresponding to the device 400 according to the embodiment of the present invention, and the foregoing and other operations and/or functions of the modules of the device 600 are separately used to implement the corresponding procedures of the methods in FIG. 1 to FIG. 4. For brevity, details are not described herein again.

It should be further understood that first, second, and various reference numerals are for distinguishing only for ease of description, and are not used to limit a scope of the embodiments of the present invention.

It should be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of the present invention. The execution sequences of the processes should be determined according to functions and internal logic of the processes, and should not be construed as any limitation on the implementation processes of the embodiments of the present invention.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention, the scope of which is determined by the appended claims.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms. The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc. The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be determined only by the protection scope of the claims.

## Claims

1. A method for transmitting a channel state information reference signal, CSI-RS, comprising:
obtaining (S110), by a first device, an unlicensed carrier, by using a Listen Before Talk, LBT, rule;
determining (S120), by the first device, a target CSI-RS from M pre-configured groups of CSI-RSs, wherein each group of CSI-RSs in the M groups of CSI-RSs is periodically sent in a time domain, different groups of CSI-RSs in the M groups of CSI-RSs have different information, the information comprises sending periods and offsets, wherein each of the offsets is a time interval between a signal start sending moment of each group of CSI-RSs and a reference moment, and M is an integer greater than 1; and
sending (S130), by the first device, the determined target CSI-RS to a second device on the unlicensed carrier at a start sending moment of the target CSI-RS, said start sending moment of the target CSI-RS being determined based on a time moment at which the first device is allowed to start to send data after occupying the unlicensed carrier.

2. The method according to claim 1, wherein the determining, by the first device, a target CSI-RS from M pre-configured groups of CSI-RSs comprises:
determining, by the first device, a CSI-RS whose start sending moment is closest to a first moment and that is in the M groups of CSI-RSs as the target CSI-RS, wherein the first moment is the moment at which the first device is allowed to start to send data on the unlicensed carrier.

3. The method according to claim 1 or 2, wherein different groups of CSI-RSs in the M groups of CSI-RSs have a same sending period and different offsets.

4. The method according to claim 1 or 2, wherein different groups of CSI-RSs in the M groups of CSI-RSs have different sending periods and a same offset.

5. The method according to claim 1 or 2, wherein different groups of CSI-RSs in the M groups of CSI-RSs have different sending periods and different offsets.

6. The method according to any one of claims 1 to 5, wherein the method further comprises:
sending, to the second device by the first device, an indication message used for indicating the start sending moment of the target CSI-RS.

7. A method for receiving a channel state information reference signal ,CSI-RS, comprising:
determining (S210), by a second device, a receiving time location used for receiving a target CSI-RS sent by a first device, wherein the target CSI-RS is a CSI-RS in M pre-configured groups of CSI-RSs, each group of CSI-RSs in the M groups of CSI-RSs is periodically sent in a time domain by said first device and received by said second device different groups of CSI-RSs in the M groups of CSI-RSs have different information, the information comprises sending periods and offsets, wherein the offset is a time interval between a signal start sending moment of each group of CSI-RSs and a reference moment, and M is an integer greater than 1 and wherein said target CSI-RS is sent by said first device at a start sending moment determined based on a time moment at which the first device is allowed to start to send data after occupying an unlicensed carrier, said unlicensed carrier being obtained by said first device using a Listen Before Talk, LBT, rule; and
receiving (S220), by the second device, the target CSI-RS at the receiving time location on the unlicensed carrier obtained by the first device.

8. The method according to claim 7, wherein the target CSI-RS is a CSI-RS whose start sending moment is closest to a first moment and that is in the M groups of CSI-RSs, and the first moment is the moment at which the first device is allowed to start to send data on the unlicensed carrier.

9. The method according to claim 7 or 8, wherein different groups of CSI-RSs in the M groups of CSI-RSs have a same sending period and different offsets.

10. The method according to claim 7 or 8, wherein different groups of CSI-RSs in the M groups of CSI-RSs have different sending periods and a same offset.

11. The method according to claim 7 or 8, wherein different groups of CSI-RSs in the M groups of CSI-RSs have different sending periods and different offsets.

12. The method according to any one of claims 7 to 11, wherein the determining, by a second device, a receiving location used for receiving a target CSI-RS sent by a first device comprises:
determining, by the second device, the receiving location by means of blind detection or by receiving an indication message that is sent by the first device and that is used for indicating the receiving location.

13. A device (300) for transmitting a channel state information reference signal, CSI-RS, comprising:
an obtaining module (310), configured to obtain an unlicensed carrier by using a Listen Before Talk, LBT, rule;
a determining module (320), configured to determine a target CSI-RS from M pre-configured groups of CSI-RSs, wherein each group of CSI-RSs in the M groups of CSI-RSs is periodically sent in a time domain, different groups of CSI-RSs in the M groups of CSI-RSs have different information, the information comprises sending periods and offsets, wherein each of the offsets is a time interval between a signal start sending moment of each group of CSI-RSs and a reference moment, and M is an integer greater than 1; and
a sending module (330), configured to send, on the unlicensed carrier obtained by the obtaining module, the determined target CSI-RS to a second device at a start sending moment of the target CSI-RS determined by the determining module, wherein said start sending moment of the target CSI-RS is determined based on a time moment at which the first device is allowed to start to send data after occupying the unlicensed carrier.

14. The device according to claim 13, wherein the determining module is specifically configured to determine a CSI-RS whose start sending moment is closest to a first moment and that is in the M groups of CSI-RSs as the target CSI-RS, and the first moment is a moment at which the first device is allowed to start to send data on the unlicensed carrier.

15. A device (400) for receiving a channel state information reference signal, CSI-RS, comprising:
a determining module (410), configured to determine a receiving time location used for receiving a target CSI-RS sent by a first device, wherein the target CSI-RS is a CSI-RS in M pre-configured groups of CSI-RSs, each group of CSI-RSs in the M groups of CSI-RSs is periodically sent in a time domain by said first device and received by said second device, different groups of CSI-RSs in the M groups of CSI-RSs have different information, the information comprises sending periods and offsets, wherein the offset is a time interval between a signal start sending moment of each group of CSI-RSs and a reference moment, and M is an integer greater than 1 and wherein said target CSI-RS is sent by said first device at a start sending moment depending on a time moment at which the first device is allowed to start to send data after occupying an unlicensed carrier, said unlicensed carrier being obtained by said first device using a Listen Before Talk, LBT, procedure; and
a receiving module (420), configured to receive, on the unlicensed carrier obtained by the first device, the target CSI-RS at the receiving time location determined by the determining module.

## Patentansprüche

1. Verfahren zum Senden eines Referenzsignals für Kanalstatusinformationen, CSI-RS, umfassend:
Erhalten (S110) eines unlizenzierten Trägers durch eine erste Einrichtung unter Verwendung einer "Listen Before Talk"-, LBT-, -Regel;
Festlegen (S120) eines Ziel-CSI-RS aus M vorkonfigurierten Gruppen von CSI-RSs durch die erste Einrichtung, wobei jede Gruppe von CSI-RSs in den M Gruppen von CSI-RSs periodisch in einer Zeitdomäne gesendet wird, unterschiedliche Gruppen von CSI-RSs in den M Gruppen von CSI-RSs unterschiedliche Information aufweisen, die Information Sendeperioden und Versatzzeiten umfasst, wobei jede der Versatzzeiten ein Zeitintervall zwischen einem Signalstart-Sendezeitpunkt jeder Gruppe von CSI-RSs und einem Referenzzeitpunkt ist und M eine Ganzzahl größer als 1 ist; und
Senden (S130) des festgelegten Ziel-CSI-RS durch die erste Einrichtung zu einer zweiten Einrichtung auf dem unlizenzierten Träger zu einem Start-Sendezeitpunkt des Ziel-CSI-RS, wobei der Start-Sendezeitpunkt des Ziel-CSI-RS festgelegt wird basierend auf einem Zeitpunkt, an dem es der ersten Einrichtung möglich ist, das Senden von Daten nach dem Belegen des unlizenzierten Trägers zu starten.

2. Verfahren nach Anspruch 1, wobei das Festlegen eines Ziel-CSI-RS durch die erste Einrichtung aus M vorkonfigurierten Gruppen von CSI-RSs umfasst:
Festlegen eines CSI-RS durch die erste Einrichtung, dessen Start-Sendezeitpunkt am nächsten an einem ersten Zeitpunkt liegt und der in den M Gruppen von CSI-RSs als das Ziel-CSI-RS vorliegt, wobei der erste Zeitpunkt der Zeitpunkt ist, zu dem es der ersten Einrichtung möglich ist, das Senden von Daten auf dem unlizenzierten Träger zu starten.

3. Verfahren nach Anspruch 1 oder 2, wobei unterschiedliche Gruppen von CSI-RSs in den M Gruppen von CSI-RSs eine gleiche Sendeperiode und unterschiedliche Versatzzeiten aufweisen.

4. Verfahren nach Anspruch 1 oder 2, wobei unterschiedliche Gruppen von CSI-RSs in den M Gruppen von CSI-RSs unterschiedliche Sendeperioden und einen gleichen Zeitversatz aufweisen.

5. Verfahren nach Anspruch 1 oder 2, wobei unterschiedliche Gruppen von CSI-RSs in den M Gruppen von CSI-RSs unterschiedliche Sendeperioden und unterschiedliche Versatzzeiten aufweisen.

6. Verfahren nach einem der Ansprüche 1 bis 5, wobei das Verfahren ferner umfasst:
Senden einer Angabenachricht, verwendet zum Angeben des Start-Sendezeitpunkts des Ziel-CSI-RS durch die erste Einrichtung zu der zweiten Einrichtung.

7. Verfahren zum Empfangen eines Referenzsignals für Kanalstatusinformationen, CSI-RS, umfassend:
Festlegen (S210) einer Empfangszeitposition durch eine zweite Einrichtung, verwendet zum Empfangen einer durch eine erste Einrichtung gesendeten Ziel-CSI-RS, wobei das Ziel-CSI-RS ein CSI-RS in M vorkonfigurierten Gruppen von CSI-RSs ist, jede Gruppe von CSI-RSs in den M Gruppen von CSI-RSs periodisch in einer Zeitdomäne durch die erste Einrichtung gesendet und durch die zweite Einrichtung empfangen wird, unterschiedliche Gruppen von CSI-RSs in den M Gruppen von CSI-RSs unterschiedliche Information aufweisen, die Information Sendeperioden und Versatzzeiten umfasst, wobei der Zeitversatz ein Zeitintervall zwischen einem Signalstart-Sendezeitpunkt jeder Gruppe von CSI-RSs und einem Referenzzeitpunkt ist und M eine Ganzzahl größer als 1 ist und wobei das Ziel-CSI-RS durch die erste Einrichtung zu einem Start-Sendezeitpunkt gesendet wird, festgelegt basierend auf einem Zeitpunkt, zu dem es der ersten Einrichtung möglich ist, das Senden von Daten nach dem Belegen eines unlizenzierten Trägers zu starten, wobei der unlizenzierte Träger durch die erste Einrichtung unter Verwendung einer "Listen Before Talk"-, LBT-, -Regel erhalten wird; und
Empfangen (S220) des Ziel-CSI-RS durch die zweite Einrichtung an der Empfangszeitposition auf dem durch die erste Einrichtung erhaltenen unlizenzierten Träger.

8. Verfahren nach Anspruch 7, wobei das Ziel-CSI-RS ein CSI-RS ist, dessen Start-Sendezeitpunkt am nächsten an einem ersten Zeitpunkt liegt und der in den M Gruppen von CSI-RSs vorliegt, wobei der erste Zeitpunkt der Zeitpunkt ist, zu dem es der ersten Einrichtung möglich ist, das Senden von Daten auf dem unlizenzierten Träger zu starten.

9. Verfahren nach Anspruch 7 oder 8, wobei unterschiedliche Gruppen von CSI-RSs in den M Gruppen von CSI-RSs eine gleiche Sendeperiode und unterschiedliche Versatzzeiten aufweisen.

10. Verfahren nach Anspruch 7 oder 8, wobei unterschiedliche Gruppen von CSI-RSs in den M Gruppen von CSI-RSs unterschiedliche Sendeperioden und einen gleichen Zeitversatz aufweisen.

11. Verfahren nach Anspruch 7 oder 8, wobei unterschiedliche Gruppen von CSI-RSs in den M Gruppen von CSI-RSs unterschiedliche Sendeperioden und unterschiedliche Versatzzeiten aufweisen.

12. Verfahren nach einem der Ansprüche 7 bis 11, wobei das Festlegen einer zum Empfangen eines durch eine erste Einrichtung gesendeten Ziel-CSI-RS verwendeten Empfangsposition durch eine zweite Einrichtung umfasst:
Festlegen der Empfangsposition durch die zweite Einrichtung mittels Blinddetektion oder durch Empfangen einer Angabenachricht, die durch die erste Einrichtung gesendet wird und die zum Angeben der Empfangsposition verwendet wird.

13. Einrichtung (300) zum Senden eines Referenzsignals für Kanalstatusinformationen, CSI-RS, umfassend:
ein Erhaltmodul (310), ausgelegt zum Erhalten eines unlizenzierten Trägers unter Verwendung einer "Listen Before Talk"-, LBT-, -Regel;
ein Bestimmungsmodul (320), ausgelegt zum Festlegen eines Ziel-CSI-RS aus M vorkonfigurierten Gruppen von CSI-RSs, wobei jede Gruppe von CSI-RSs in den M Gruppen von CSI-RSs periodisch in einer Zeitdomäne gesendet wird, unterschiedliche Gruppen von CSI-RSs in den M Gruppen von CSI-RSs unterschiedliche Information aufweisen, die Information Sendeperioden und Versatzzeiten umfasst, wobei jede der Versatzzeiten ein Zeitintervall zwischen einem Signalstart-Sendezeitpunkt jeder Gruppe von CSI-RSs und einem Referenzzeitpunkt ist und M eine Ganzzahl größer als 1 ist; und
ein Sendemodul (330), ausgelegt zum Senden des festgelegten Ziel-CSI-RS zu einer zweiten Einrichtung auf dem unlizenzierten Träger zu einem durch das Bestimmungsmodul festgelegten Start-Sendezeitpunkt des Ziel-CSI-RS, wobei der Start-Sendezeitpunkt des Ziel-CSI-RS festgelegt wird basierend auf einem Zeitpunkt, an dem es der ersten Einrichtung möglich ist, das Senden von Daten nach dem Belegen des unlizenzierten Trägers zu starten.

14. Einrichtung nach Anspruch 13, wobei das Bestimmungsmodul im Einzelnen ausgelegt ist zum Festlegen eines CSI-RS, dessen Start-Sendezeitpunkt am nächsten an einem ersten Zeitpunkt liegt und der in den M Gruppen von CSI-RSs als das Ziel-CSI-RS vorliegt, und der erste Zeitpunkt der Zeitpunkt ist, zu dem es der ersten Einrichtung möglich ist, das Senden von Daten auf dem unlizenzierten Träger zu starten.

15. Einrichtung (400) zum Empfangen eines Referenzsignals für Kanalstatusinformationen, CSI-RS, umfassend:
ein Bestimmungsmodul (410), ausgelegt zum Festlegen einer Empfangszeitposition, verwendet zum Empfangen einer durch eine erste Einrichtung gesendeten Ziel-CSI-RS, wobei das Ziel-CSI-RS ein CSI-RS in M vorkonfigurierten Gruppen von CSI-RSs ist, jede Gruppe von CSI-RSs in den M Gruppen von CSI-RSs periodisch in einer Zeitdomäne durch die erste Einrichtung gesendet und durch die zweite Einrichtung empfangen wird, unterschiedliche Gruppen von CSI-RSs in den M Gruppen von CSI-RSs unterschiedliche Information aufweisen, die Information Sendeperioden und Versatzzeiten umfasst, wobei der Zeitversatz ein Zeitintervall zwischen einem Signalstart-Sendezeitpunkt jeder Gruppe von CSI-RSs und einem Referenzzeitpunkt ist und M eine Ganzzahl größer als 1 ist und wobei das Ziel-CSI-RS durch die erste Einrichtung zu einem Start-Sendezeitpunkt gesendet wird, in Abhängigkeit von einem Zeitpunkt, zu dem es der ersten Einrichtung möglich ist, das Senden von Daten nach dem Belegen eines unlizenzierten Trägers zu starten, wobei der unlizenzierte Träger durch die erste Einrichtung unter Verwendung einer "Listen Before Talk"-, LBT-, -Prozedur erhalten wird; und
ein Empfangsmodul (420), ausgelegt zum Empfangen des Ziel-CSI-RS an der Empfangszeitposition, festgelegt durch das Bestimmungsmodul, auf dem durch die erste Einrichtung erhaltenen unlizenzierten Träger.

## Revendications

1. Procédé de transmission d'un signal de référence d'informations d'état de canal, CSI-RS, comprenant :
l'obtention (S110), par un premier dispositif, d'une porteuse sans licence, au moyen d'une règle Ecouter Avant de Parler, LBT ;
la détermination (S120), par le premier dispositif, d'un CSI-RS cible parmi M groupes de CSI-RS préconfigurés, chaque groupe de CSI-RS parmi les M groupes de CSI-RS étant envoyé de façon périodique dans un domaine temporel, des groupes de CSI-RS différents parmi les M groupes de CSI-RS ayant des informations différentes, les informations comprenant des périodes d'envoi et des décalages, où chacun des décalages est un intervalle de temps entre un moment de commencement d'envoi de signal de chaque groupe de CSI-RS et un moment de référence, et M est un entier supérieur à 1 ; et
l'envoi (S130), par le premier dispositif, du CSI-RS cible déterminé à un deuxième dispositif sur la porteuse sans licence à un moment de commencement d'envoi du CSI-RS cible, ledit moment de commencement d'envoi du CSI-RS cible étant déterminé en fonction d'un instant auquel le premier dispositif est autorisé à commencer à envoyer des données après occupation de la porteuse sans licence.

2. Procédé selon la revendication 1, dans lequel la détermination, par le premier dispositif, d'un CSI-RS cible parmi M groupes de CSI-RS préconfigurés comprend :
la détermination, par le premier dispositif, en tant que CSI-RS cible, d'un CSI-RS dont le moment de commencement d'envoi est le plus près d'un premier moment et qui se trouve dans les M groupes de CSI-RS, le premier moment étant le moment auquel le premier dispositif est autorisé à commencer à envoyer des données sur la porteuse sans licence.

3. Procédé selon la revendication 1 ou 2, dans lequel des groupes de CSI-RS différents parmi les M groupes de CSI-RS ont une même période d'envoi et des décalages différents.

4. Procédé selon la revendication 1 ou 2, dans lequel des groupes de CSI-RS différents parmi les M groupes de CSI-RS ont des périodes d'envoi différentes et un même décalage.

5. Procédé selon la revendication 1 ou 2, dans lequel des groupes de CSI-RS différents parmi les M groupes de CSI-RS ont des périodes d'envoi différentes et des décalages différents.

6. Procédé selon l'une quelconque des revendications 1 à 5, lequel procédé comprend en outre :
l'envoi, au deuxième dispositif par le premier dispositif, d'un message d'indication utilisé pour indiquer le moment de commencement d'envoi du CSI-RS cible.

7. Procédé de réception d'un signal de référence d'informations d'état de canal, CSI-RS, comprenant :
la détermination (S210), par un deuxième dispositif, d'un emplacement temporel de réception utilisé pour recevoir un CSI-RS cible envoyé par un premier dispositif, le CSI-RS cible étant un CSI-RS parmi M groupes de CSI-RS préconfigurés, chaque groupe de CSI-RS parmi les M groupes de CSI-RS étant envoyé de façon périodique dans un domaine temporel par ledit premier dispositif et reçu par ledit deuxième dispositif, des groupes de CSI-RS différents parmi les M groupes de CSI-RS ayant des informations différentes, les informations comprenant des périodes d'envoi et des décalages, où le décalage est un intervalle de temps entre un moment de commencement d'envoi de signal de chaque groupe de CSI-RS et un moment de référence, et M est un entier supérieur à 1, et ledit CSI-RS cible étant envoyé par ledit premier dispositif à un moment de commencement d'envoi déterminé en fonction d'un instant auquel le premier dispositif est autorisé à commencer à envoyer des données après occupation d'une porteuse sans licence, ladite porteuse sans licence étant obtenue par ledit premier dispositif au moyen d'une règle Ecouter Avant de Parler, LBT ; et
la réception (S220), par le deuxième dispositif, du CSI-RS cible à l'emplacement temporel de réception sur la porteuse sans licence obtenue par le premier dispositif.

8. Procédé selon la revendication 7, dans lequel le CSI-RS cible est un CSI-RS dont le moment de commencement d'envoi est le plus près d'un premier moment et qui se trouve dans les M groupes de CSI-RS, le premier moment étant le moment auquel le premier dispositif est autorisé à commencer à envoyer des données sur la porteuse sans licence.

9. Procédé selon la revendication 7 ou 8, dans lequel dans lequel des groupes de CSI-RS différents parmi les M groupes de CSI-RS ont une même période d'envoi et des décalages différents.

10. Procédé selon la revendication 7 ou 8, dans lequel des groupes de CSI-RS différents parmi les M groupes de CSI-RS ont des périodes d'envoi différentes et un même décalage.

11. Procédé selon la revendication 7 ou 8, dans lequel des groupes de CSI-RS différents parmi les M groupes de CSI-RS ont des périodes d'envoi différentes et des décalages différents.

12. Procédé selon l'une quelconque des revendications 7 à 11, dans lequel la détermination, par un deuxième dispositif, d'un emplacement de réception utilisé pour recevoir un CSI-RS cible envoyé par un premier dispositif comprend :
la détermination, par le deuxième dispositif, de l'emplacement de réception au moyen d'une détection à l'aveugle ou par réception d'un message d'indication qui est envoyé par le premier dispositif et qui est utilisé pour indiquer l'emplacement de réception.

13. Dispositif (300) pour la transmission d'un signal de référence d'informations d'état de canal, CSI-RS, comprenant :
un module d'obtention (310), configuré pour obtenir une porteuse sans licence, au moyen d'une règle Ecouter Avant de Parler, LBT ;
un module de détermination (320), configuré pour déterminer un CSI-RS cible parmi M groupes de CSI-RS préconfigurés, chaque groupe de CSI-RS parmi les M groupes de CSI-RS étant envoyé de façon périodique dans un domaine temporel, des groupes de CSI-RS différents parmi les M groupes de CSI-RS ayant des informations différentes, les informations comprenant des périodes d'envoi et des décalages, où chacun des décalages est un intervalle de temps entre un moment de commencement d'envoi de signal de chaque groupe de CSI-RS et un moment de référence, et M est un entier supérieur à 1 ; et
un module d'envoi (330), configuré pour envoyer, sur la porteuse sans licence obtenue par le module d'obtention, le CSI-RS cible déterminé à un deuxième dispositif à un moment de commencement d'envoi du CSI-RS cible déterminé par le module de détermination, ledit moment de commencement d'envoi du CSI-RS cible étant déterminé en fonction d'un instant auquel le premier dispositif est autorisé à commencer à envoyer des données après occupation de la porteuse sans licence.

14. Dispositif selon la revendication 13, dans lequel le module de détermination est spécifiquement configuré pour déterminer, en tant que CSI-RS cible, un CSI-RS dont le moment de commencement d'envoi est le plus près d'un premier moment et qui se trouve dans les M groupes de CSI-RS, le premier moment étant un moment auquel le premier dispositif est autorisé à commencer à envoyer des données sur la porteuse sans licence.

15. Dispositif (400) pour la réception d'un signal de référence d'informations d'état de canal, CSI-RS, comprenant :
un module de détermination (410), configuré pour déterminer un emplacement temporel de réception utilisé pour recevoir un CSI-RS cible envoyé par un premier dispositif, le CSI-RS cible étant un CSI-RS parmi M groupes de CSI-RS préconfigurés, chaque groupe de CSI-RS parmi les M groupes de CSI-RS étant envoyé de façon périodique dans un domaine temporel par ledit premier dispositif et reçu par ledit deuxième dispositif, des groupes de CSI-RS différents parmi les M groupes de CSI-RS ayant des informations différentes, les informations comprenant des périodes d'envoi et des décalages, où le décalage est un intervalle de temps entre un moment de commencement d'envoi de signal de chaque groupe de CSI-RS et un moment de référence, et M est un entier supérieur à 1, et ledit CSI-RS cible étant envoyé par le premier dispositif à un moment de commencement d'envoi déterminé en fonction d'un instant auquel le premier dispositif est autorisé à commencer à envoyer des données après occupation d'une porteuse sans licence, ladite porteuse sans licence étant obtenue par ledit premier dispositif au moyen d'une procédure Ecouter Avant de Parler, LBT ; et
un module de réception (420), configuré pour recevoir, sur la porteuse sans licence obtenue par le premier dispositif, le CSI-RS cible à l'emplacement temporel de réception déterminé par le module de détermination.
